# EUROPÄISCHE PATENTSCHRIFT

(11) **EP 0 829 803 B1**
(45) Veröffentlichungstag und Bekanntmachung des Hinweises auf die Patenterteilung: **15.05.2002**
(21) Anmeldenummer: 97115710.2
(22) Anmeldetag: 10.09.1997
(51) Int. Cl.: G06F 7/52

(54) **Digitaler Signalprozessor und Verfahren zur Durchführung einer Multiplikation mit einem digitalen Signalprozessor**
Digital signal processor and method for performing a multiplication in a digital signal processor
Processeur de traitement de signal numérique et méthode pour effectuer une multiplication dans un tel processeur

(30) Priorität: 13.09.1996 DE 19637369
(43) Veröffentlichungstag der Anmeldung: 18.03.1998
(73) Patentinhaber: MICRONAS Semiconductor Holding AG, 8050 Zürich (CH)
(72) Erfinder: Winterer, Martin, Dipl.-Phys, 79194 Gundelfingen (DE)
(74) Vertreter: Hornig, Leonore, Dr.

(56) Entgegenhaltungen:
- WO-A-93/25959
- MURAKAMI H ET AL: "A MULTIPLIER- ACCUMULATOR MACRO FOR A 45 MIPS EMBEDDED RISC PROCESSOR" IEEE JOURNAL OF SOLID-STATE CIRCUITS, Bd. 31, Nr. 7, Juli 1996, Seiten 1067-1071, XP000632397
- PATENT ABSTRACTS OF JAPAN vol. 010, no. 162 (P-466), 10.Juni 1986 -& JP 61 015233 A (SONY KK), 23.Januar 1986,
- R. GLUTH: "Integrierte Signalprozessoren, Architekturen und technische Realisierung" ELEKTRONIK, Bd. 35, Nr. 18, September 1986, MUNCHEN DE, Seiten 112-125, XP002057588

## Beschreibung

Die Erfindung betrifft einen digitalen Signalprozessor mit einem Schreib-Lesespeicher (RAM) für Datenwörter mit einer Länge von M Bit, einer Multipliziereinrichtung zum Multiplizieren von einem ersten, an dem ersten Eingang liegenden Datenwort der Länge M Bit mit einem zweiten, an einem zweiten Eingang liegenden Datenwort der Länge N Bit, mit M größer N, wobei der Ausgang des RAM's mit dem ersten Eingang und, über eine erste Hilfsspeichereinrichtung, mit dem zweiten Eingang der Multipliziereinrichtung verbunden ist, und die erste Hilfsspeichereinrichtung derart ausgebildet ist, daß ein ihr zugeführtes Datenwort der Länge M Bit als zwei Datenteilwörter der Länge N Bit und der Länge M - N Bit nacheinander ausgegeben wird, mit einer der Multipliziereinrichtung nachgeschalteten Addiereinrichtung und mit einer Takteinrichtung zum Steuern der Datenwortweitergabe.

Ein derartiger digitaler Signalprozessor hat eine einfache Struktur. Er benötigt insbesondere wenige Datenspeicher. Somit benötigt er nur wenig Platz, was insbesondere vorteilhaft ist, wenn der digitale Signalprozessor auf einem Halbleiterwafer integriert wird. In diesem Fall kann teures Halbleitermaterial eingespart werden. Es wird dennoch ein großer Durchsatz an Daten gewährleistet. Da der Ausgang des RAM's mit dem ersten Eingang und, mittels einer Hilfsspeichereinrichtung, auch mit dem zweiten Eingang der Multipliziereinrichtung verbunden ist, können zwei, aus einem Speicher, dem RAM, zur Verfügung gestellte, variable Größen miteinander multipliziert werden. Durch die Anordnung der Multipliziereinrichtung, deren zweiter Eingang nur ein Datenwort der Länge N bit aufnehmen kann, welches kleiner ist als das von dem RAM ausgegebene Datenwort, kann weiter Platz eingespart werden.

Nachteilig an diesem digitalen Signalprozessor ist, daß viele Rechenzyklen notwendig sind, wenn man viele Datenwörter der Länge M Bit miteinander multiplizieren möchte. Für die Berechnung jeder Multiplikation werden jeweils drei von dem Taktgenerator ausgegebene Takte benötigt. Bei dem Verfahren zur Durchführung einer Multiplikation wird in einem ersten Schritt die erste Hilfsspeichereinrichtung mit einem n-ten Datenwort aus dem RAM geladen. In einem zweiten Takt wird ein n+1 tes, aus dem RAM an den ersten Eingang der Multipliziereinrichtung gegebenes Datenwort mit dem ersten Datenteilwort des n-ten Datenwortes, das aus der ersten Hilfsspeichereinrichtung auf den zweiten Eingang der Multipliziereinrichtung gegeben wird, multipliziert. In einem dritten Takt wird das n+1-te Datenwort aus dem RAM an dem ersten Eingang der Multipliziereinrichtung mit dem zweiten Datenteilwort des n-ten Datenwortes, das aus der ersten Hilfsspeichereinrichtung an den zweiten Eingang des Multiplizierers gelegt wird, multipliziert. Diese drei Schritte werden mit den folgenden Datenwörtern, die dem RAM entnommen werden, jeweils wiederholt. n ist dabei eine ganze Zahl ≥ 1. Dabei ist der Bus des RAMS bei jedem Takt belegt.

Ein digitaler Signalprozessor mit einer ersten Hilfsspeichervorrichtung für Datenwörter mit einer Länge von M Bit, einer Multipliziervorrichtung zum Multiplizieren von einem ersten, an dem ersten Eingang liegenden Datenwort der Länge M Bit mit einem zweiten, an einem zweiten Eingang liegenden Datenwort der Länge N Bit, mit M>N, wobei der Ausgang der ersten Hilfsspeichervorrichtung mit dem ersten Eingang und der Ausgang der zweiten Hilfsspeichervorrichtung mit dem zweiten Eingang der Multipliziervorrichtung verbunden ist, und die zweite Hilfsspeichervorrichtung derart ausgebildet ist, daß ein ihr zugeführtes Datenwort der Länge M Bit als zwei Datenteilwörter der Länge N Bit und der Länge M-N Bit nacheinander ausgegeben wird, mit einer der Multipliziervorrichtung nachgeschalteten Addiervorrichtung und mit einer Taktvorrichtung zum Steuern der Datenwortweitergabe, wird in dem Artikel "A MULTIPLIER-ACCUMULATOR MACRO FOR A 45 MIPS EMBEDDED RISC PROCESSOR" von H. Murakami et al in IEEE JOURNAL OF SOLID-STATE CIRCUITS, Bd. 31, Nr. 7, Juli 1996, Seiten 1067-1071 beschrieben.

Der Erfindung liegt die Aufgabe zugrunde, einen schnelleren digitalen Signalprozessor gemäß Anspruch 1 und ein schnelleres Verfahren zur Durchführung einer Multiplikation mit dem Signalprozessor gemäß Anspruch 5 zu schaffen.

Diese Aufgabe wird durch einen digitalen Signalprozessor gelöst, der eine zweite, zwischen das RAM und den ersten Eingang der Multipliziereinrichtung geschaltete Hilfsspeichereinrichtung und ein erstes Schaltelement umfaßt, mittels dem das RAM und die zweite Hilfsspeichereinrichtung mit dem ersten Eingang der Multipliziereinrichtung verbindbar sind.

Bei dieser Anordnung kann ein Datenwort aus dem RAM während der Durchführung einer Multiplikation in die zweite Hilfsspeichereinrichtung geladen werden. Im nächsten Takt kann dann das in der zweiten Hilfsspeichereinrichtung gespeicherte Datenwort für die nächste Multiplikation verwendet werden und gleichzeitig ein weiteres Datenwort aus dem RAM in die erste Hilfsspeichereinrichtung geladen werden. Zur Ausführung einer Gesamtmultiplikation von zwei Datenwörtern, die jeweils die Länge M Bit haben, d.h. zwei Multiplikationen mit Datenteilwörtern, sind dann nur zwei, von der Takteinrichtung gegebene Takte erforderlich. Da bei den beiden Multiplikationen das Datenwort, das auf den ersten Eingang der

Multipliziereinrichtung gegeben wird, das gleiche ist, kann es bei einem Takt dem RAM und bei dem darauffolgenden Takt der zweiten Hilfsspeichereinrichtung entnommen werden und mit dem jeweiligen Datenteilwort am zweiten Eingang der Multipliziereinrichtung multipliziert werden. Somit arbeitet der Signalprozessor deutlich schneller.

Gemäß einem bevorzugten Ausführungsbeispiel der Erfindung ist der ersten Hilfsspeichereinrichtung ein zweites Schaltelement nachgeschaltet, mit dem die Datenteilwörter wahlweise an den zweiten Eingang der Multipliziereinrichtung anlegbar sind. Dies ist eine einfache Realisierung zur Aufteilung eines Datenwortes der Länge M in zwei Datenteilwörter der Länge M und der Länge M - N Bit, die dann über den Schalter nacheinander weitergegeben werden können.

Gemäß einer Weiterbildung der Erfindung ist ein Festwertspeicher mittels eines dritten Schaltelements wahlweise zu dem RAM mit dem zweiten Eingang der Multipliziereinrichtung verbindbar. Es kann dann auf das ROM umgeschaltet werden, wenn eine variable Größe mit einer konstanten Größe multipliziert werden soll.

Es ist günstig, wenn die erste Hilfsspeichereinrichtung derart ausgebildet ist, daß sie während eines durch die Takteinrichtung gegebenen Taktes ein Datenwort ausgeben und ein weiteres Datenwort aufnehmen kann. Derartige Hilfsspeichereinrichtungen sind beispielsweise Master-Slave-Flip-Flops.

Bei einem bevorzugten Verfahren zur Durchführung einer Multiplikation mit einem erfindungsgemäßen digitalen Signalprozessor wird in einem durch die Takteinrichtung gegebenen ersten Takt die erste Hilfsspeichereinrichtung mit einem n-ten Datenwort aus dem RAM geladen; in einem zweiten Takt eine Multiplikation mit einem n + 1 ten, aus dem RAM an den ersten Eingang der Multipliziereinrichtung gelieferten Datenwort und einem ersten von der ersten Hilfsspeichereinrichtung an den zweiten Eingang der Multipliziereinrichtung gelieferten Datenteilwort des n-ten Datenworts durchgeführt, und das n + 1 te Datenwort aus dem RAM in der zweiten Hilfsspeichereinrichtung gespeichert; in einem dritten Takt wird eine Multiplikation mit dem, aus der zweiten Hilfsspeichereinrichtung an den ersten Eingang der Multipliziereinrichtung gelieferten n + 1-ten Datenwort und einem zweiten von der zweiten Hilfsspeichereinrichtung an den zweiten Eingang der Multipliziereinrichtung gelieferten Datenteilwort des n-ten Datenworts, und ein n + 2-tes Datenwort aus dem RAM in der ersten Hilfseinrichtung gespeichert; und die im zweiten und dritten Takt durchgeführten Schritte werden mit den folgenden Datenwörtern wiederholt. In diesem Fall sind, wie bereits oben ausgeführt, zwei Rechentakte erforderlich, um eine Multiplikation mit zwei variablen Datenwörtern der Länge M Bit durchzuführen. Nur zum Start, d.h. im ersten Takt muß zusätzlich der Wert aus dem RAM in die erste Hilfsspeichereinrichtung geladen werden, so daß dadurch insgesamt drei Rechentakte für die Multiplikation erforderlich sind. Danach ist das entsprechende Datenwort jeweils während der vorangegangenen Multiplikation in der ersten Hilfsspeichereinrichtung geladen, so daß dann nur noch zwei Rechentakte erforderlich sind.

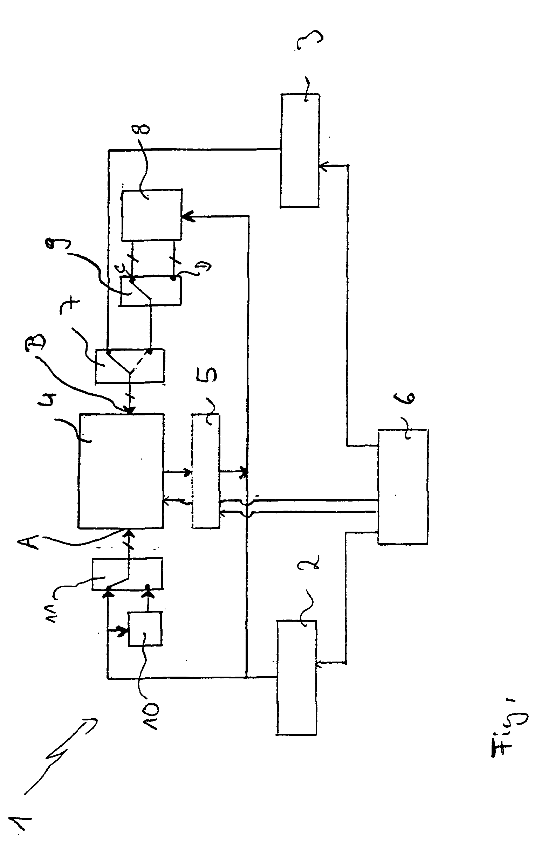

Im folgenden wird die Erfindung anhand der Figur näher erläutert.

Die Figur zeigt ein Ausführungsbeispiel eines erfindungsgemäßen digitalen Signalprozessors.

Der in der Figur gezeigte Signalprozessor 1 umfaßt einen Schreiblesespeicher (RAM) 2, einen Festwertspeicher (ROM) 3, eine Multipliziereinrichtung (Multiplizierer) 4 und eine Addiereinrichtung (Addierer, Akkumulator) 5. Ausführungsbeispiele für die genannten Elemente des Signalprozessors 1 sind dem Fachmann bekannt. Von dem RAM 2 können variable Datenwörter (Zustandsvariablen) und von dem ROM 3 konstante Datenwörter (konstante Koeffizienten) geliefert werden.

In einem ersten Betriebszustand des Signalprozessors 1 können von dem RAM 2 Zustandsvariablen an den ersten Eingang A des Multiplizierers 4 gegeben werden. Dabei sind die Zustandsvariablen Datenwörter der Länge M Bit. Von dem ROM 3 können konstante Koeffizienten an den zweiten Eingang B des Multiplizierers 4 gegeben werden. Die konstanten Koeffizienten sind Datenwörter der Länge N Bit, wobei M größer als N ist. Der Multiplizierer ist als ein M x N Multiplizierer ausgelegt. Nach der Multiplikation in dem Multiplizierer 4 wird das Ergebnis an den Addierer 5 weitergeleitet, wo es auch gespeichert und mit weiteren Ergebnissen aus dem Multiplizierer 4 aufaddiert werden kann. Die Signale zum Weiterleiten der Datenwörter werden jeweils von einer Takteinrichtung (Taktgenerator) 6 an die jeweiligen Elemente des Signalprozessors 1 gegeben.

In einem zweiten Betriebszustand des Signalprozessors 1 können zwei variable Datenwörter miteinander multipliziert werden. Hierzu wird über das dritte Schaltelement 7 das ROM von dem zweiten Eingang B des Multiplizierers 4 entkoppelt. Der zweite Eingang B des Multiplizierers 4 wird über ein zweites Schaltelement 9 mit der ersten Hilfsspeichereinrichtung 8 verbunden, in welcher ein Datenwort aus dem RAM 2 gespeichert werden kann. Auf diese Weise können an beiden Eingänge des Multiplizierers 4 aus dem RAM 2 entnommene variable Datenwörter zugeführt werden. Die von dem RAM 2 ausgegebene Datenwörter haben die Länge M Bit. In der ersten Hilfsspeichereinrichtung 8 wird ein solches Datenwort in zwei Datenteilwörter der Länge N Bit und der Länge M - N Bit unterteilt. Über das zweite Schaltelement 9 werden diese Datenteilwörter nacheinander an den zweiten Eingang B des Multiplizierers 4 gegeben. Zwischen dem RAM 2 und dem ersten Eingang A des Multiplizierers 4 ist eine zweite Hilfsspeichereinrichtung 10 angeordnet. Mit dem ersten Schaltelement 11 kann der erste Eingang A des Multiplizierers 4 wahlweise mit dem RAM 2 und der zweiten Hilfsspeichereinrichtung 10 verbunden werden. Mögliche Ausführungen von Schaltelementen und Hilfsspeichereinrichtungen sind dem Fachmann bekannt; für Hilfsspeichereinrichtungen werden bevorzugt Registerspeicher verwendet.

Zur Durchführung einer Multiplikation von zwei variablen Datenwörtern aus dem RAM 2 werden jeweils zwei Takte aus der Takteinrichtung 6 benötigt. Zu Beginn des Verfahrens wird ein zusätzlicher Takt, der hier als erster Takt bezeichnet wird erforderlich. Während dem ersten Takt wird ein Datenwort Y1 aus dem RAM 2 in die erste Hilfsspeichereinrichtung 8 geladen. Das Datenwort Y1, das eine Länge von M Bit hat, wird in zwei Datenteilwörter aufgeteilt, wobei das erste Datenteilwort der Länge N Bit (hig part) an dem ersten Eingang C des zweiten Schaltelements 9 liegt, und das zweite Datenteilwort der Länge M - N Bit (low part) an dem zweiten Eingang D des zweiten Schaltelements 9 anliegt.

Während des zweiten Taktes wird ein Datenwort X1, das aus dem RAM 2 an den ersten Eingang A des Multiplizierers 4 gegeben wird, mit dem Datenteilwort Y1, high part mit der Länge N Bit, das über den ersten Eingang C des zweiten Schaltelements 9 an dem zweiten Eingang B des Multiplizierers liegt, multipliziert. Gleichzeitig wird das Datenwort X1 auf dem RAM 2 in die zweite Hilfsspeichereinrichtung 10 geladen.

Während des dritten Taktes gelangt das Datenwort X1 über das erste Schaltelement 11 aus der zweiten Hilfsspeichereinrichtung 10 an den ersten Eingang A des Multiplizierers. Das Datenteilwort Y1 low part, mit der Länge M - N Bit gelangt über den Eingang D des zweiten Schaltelements 9 an den zweiten Eingang B des Multiplizierers 4. Dort wird die Multiplikation von X1 mit Y1 low part durchgeführt. Gleichzeitig wird das folgende Datenwort Y2 aus dem RAM 2 in die erste Hilfsspeichereinrichtung 8 geladen.

Es wird in diesen drei Takten die Multiplikation der Datenwörter X1 und Y1, die nacheinander aus dem RAM 2 entnommen werden, durchgeführt. Die Aufaddierung der Teilmultiplikation erfolgt in dem Addierer 5. Für die folgende Multiplikation der aus dem RAM 2 zu entnehmenden Datenwörter X2 und Y2 wurde bereits der oben in dem ersten Takt durchgeführte Schritt vorgenommen, da während des dritten Taktes die erste Hilfsspeichereinrichtung 8 mit dem Datenwort Y2 geladen wurde. Bei der zweiten Multiplikation der Datenwörter X2 mit Y2 müssen somit nur die in dem zweiten und dritten Takt durchgeführten Schritte mit den entsprechenden Datenwörtern durchgeführt werden. Dasselbe gilt für die darauffolgenden Multiplikationen mit weiteren Datenwörtern aus dem RAM 2. Dieses Verfahren wird so lange fortgesetzt, wie die Multiplikation von zwei variablen Datenwörtern aus dem RAM 2 benötigt wird. Danach kann durch Umschalten des Schaltelements 7 wieder der Ausgang des ROM's 3 mit dem zweiten Eingang B des Multiplizierers 4 verbunden werden. Dann können Multiplikationen von einer variablen mit einer konstanten Größe durchgeführt werden.

Das erfindungsgemäße Verfahren wird insbesondere für adaptive Filter, beispielsweise zum Verhindern von Echos in Telefonen und für Filterbanken, etwa zur Rauschunterdrückung oder Quellencodierung verwendet.

## Patentansprüche

1. Digitaler Signalprozessor
mit einem Schreib-Lesespeicher RAM (2) für Datenwörter mit einer Länge von M Bit,
einer Multipliziereinrichtung zum Multiplizieren von einem ersten, an dem ersten Eingang (A) liegenden Datenwort der Länge M Bit mit einem zweiten, an einem zweiten Eingang liegenden Datenwort der Länge N Bit, mit M>N,
wobei der Ausgang des RAM's (2) mit dem ersten Eingang (A) und über, eine erste Hilfsspeichereinrichtung (8) mit dem zweiten Eingang (B) der Multipliziereinrichtung (4) verbunden ist,
und die erste Hilfsspeichereinrichtung (8) derart ausgebildet ist, daß ein ihr zugeführtes Datenwort der Länge M Bit als zwei Datenteilwörter der Länge N Bit und der Länge M-N Bit nacheinander ausgegeben wird,
mit einer der Multipliziereinrichtung (4) nachgeschalteten Addiereinrichtung (5)
und mit einer Takteinrichtung (6) zum Steuern der Datenwortweitergabe **gekennzeichnet durch**
eine zweite, zwischen das RAM (2) und den ersten Eingang (A) der Multipliziereinrichtung (4) geschaltete Hilfsspeichereinrichtung (10) und
ein erstes Schaltelement (11), mittels dem das RAM (2) und die zweite Hilfsspeichereinrichtung (10) mit dem ersten Eingang (A) der Multipliziereinrichtung (4) verbindbar sind.

2. Digitaler Signalprozessor nach Anspruch 1, **gekennzeichnet durch** ein der ersten Hilfsspeichereinrichtung (8) nachgeschaltetes, zweites Schaltelment (9), mit dem die Datenteilwörter wahlweise an den zweiten Eingang (B) der Multipliziereinrichtung (4) anlegbar sind.

3. Digitaler Signalprozessor nach einem der vorangehenden Ansprüche, **gekennzeichnet durch** einen Festwertspeicher (ROM) (3), der mittels eines dritten Schaltelements (7) wahlweise zu dem RAM (2) mit dem zweiten Eingang (B) der Multipliziereinrichtung (4) verbindbar ist.

4. Digitaler Signalprozessor nach einem der vorangehenden Ansprüche, **dadurch gekennzeichnet, daß** die erste Hilfsspeichereinrichtung (8) derart ausgebildet ist, daß sie während eines durch die Takteinrichtung (6) gegebenen Taktes ein Datenwort ausgeben und ein weiteres Datenwort aufnehmen kann.

5. Verfahren zur Durchführung einer Multiplikation mit einem digitalen Signalprozessor nach einem der vorangehenden Ansprüche, **dadurch gekennzeichnet,**
**daß** in einem durch die Takteinrichtung (6) gegebenen ersten Takt die erste Hilfsspeichereinrichtung (8) mit einem n-ten Datenwort aus dem RAM (2) geladen wird,
in einem zweiten Takt eine Multiplikation mit einem n+1sten, aus dem RAM (2) an den ersten Eingang (A) der Multipliziereinrichtung (4) gelieferten Datenwort und einem ersten von der ersten Hilfsspeichereinrichtung (8) an den zweiten Eingang (B) der Multipliziereinrichtung (4) gelieferten Datenteilwort des n-ten Datenworts erfolgt, und das n+1ste Datenwort aus dem RAM (2) in der zweiten Hilfsspeichereinrichtung (10) gespeichert wird,
in einem dritten Takt eine Multiplikation mit dem, aus der zweiten Hilfsspeichereinrichtung (10) an den ersten Eingang (A) der Multipliziereinrichtung (4) gelieferten Datenwort und einem zweiten, von der ersten Hilfsspeichereinrichtung (8) an den zweiten Eingang (B) der Multipliziereinrichtung (4) gelieferten Datenteilwort des n-ten Datenworts erfolgt, und ein n+2tes Datenwort aus dem RAM (2) in der ersten Hilfsspeichereinrichtung (8) gespeichert wird,
und die im zweiten und dritten Takt durchgeführten Schritte mit den folgenden, von dem RAM (2) ausgegebenen Datenwörtern wiederholt werden.

## Claims

1. A digital signal processor comprising
a random-access memory RAM (2) for M-bit data words,
a multiplier for multiplying a first, M-bit data word applied at a first input (A) thereof by a second, N-bit data word applied at a second input (B) thereof, with M being greater than N,
the output of the RAM (2) being connected to the first input (A) and, through a first temporary storage device (8), to the second input (B) of the multiplier (4),
the first temporary storage device (8) being designed to output an applied M-bit data word as two successive partial words of bit lengths N and M - N, respectively, an adder (5) following the multiplier (4), and
a clock device (6) for controlling data-word transfers,
**characterized by**
a second temporary storage device (10), which is connected between the RAM (2) and the first input (A) of the multiplier (4), and a first switching element (11), by which the RAM (2) and the second temporary storage device (10) are connectable to the first input (A) of the multiplier (4).

2. A digital signal processor as claimed in claim 1,
**characterized by** a second switching element (9), following the first temporary storage device (8), for applying either of the partial data words to the second input (B) of the multiplier (4).

3. A digital signal processor as claimed in any one of the preceding claims, **characterized by** a read-only memory (ROM) (3) which is connectable instead of the RAM (2) to the second input (B) of the multiplier (4) by means of a third switching element (7).

4. A digital signal processor as claimed in any one of the preceding claims, **characterized in that** the first temporary storage device (8) is designed to be capable of outputting one data word and accepting one further data word during each clock period defined by the clock device (6).

5. A method for performing a multiplication with a digital signal processor as claimed in any one of the preceding claims,
**characterized in**
**that** in a first clock period defined by the clock device (6), an nth data word is loaded from the RAM (2) into the first temporary storage device (8),
**that** in a second clock period, a multiplication of an n+1st data word transferred from the RAM (2) to the first input (A) of the multiplier (4) and a first partial word of the nth data word transferred from the first temporary storage device (8) to the second input (B) of the multiplier (4) is performed, and the n+1st data word from the RAM (2) is stored in the second temporary storage device (10),
**that** in a third clock period, a multiplication of the data word transferred from the second temporary storage device (10) to the first input (A) of the multiplier (4) and a second partial word of the nth data word transferred from the first temporary storage device (8) to the second input (B) of the multiplier (4) is performed, and an n+2nd data word from the RAM (2) is stored in the first temporary storage device (8), and that the steps carried out in the second and third clock periods are repeated with the subsequent data words delivered by the RAM (2).

## Revendications

1. Processeur de traitement de signal comportant :
une mémoire d'écriture et de lecture RAM (2) pour des mots de données ayant une longueur de M bits,
un dispositif multiplicateur (4) pour la multiplication d'un premier mot de données appliqué à une première entrée (A) et ayant une longueur de M bits par un deuxième mot de données appliqué à une deuxième entrée (B) et ayant une longueur de N bits, avec M > N,
la sortie de la RAM (2) étant reliée à la première entrée (A) et, par l'intermédiaire d'un premier dispositif de mémoire auxiliaire (8), à la deuxième entrée (B) du dispositif multiplicateur (4),
et le premier dispositif de mémoire auxiliaire (8) étant conformé de telle manière qu'un mot de données ayant une longueur de M bits qui lui est envoyé fournit en sortie, l'un après l'autre, deux mots partiels de données ayant une longueur de N bits et une longueur de M - N bits,
un dispositif additionneur (5) branché en aval du dispositif multiplicateur (4),
et un dispositif d'horloge (6) pour la commande de la transmission des mots de données
**caractérisé par**
un deuxième dispositif de mémoire auxiliaire (10) branché entre la RAM (2) et la première entrée (A) du dispositif multiplicateur (4) et un premier élément de commutation (11) au moyen duquel on peut relier la RAM (2) et le deuxième dispositif de mémoire auxiliaire (10) à la première entrée (A) du dispositif multiplicateur (4).

2. Processeur de traitement de signal selon revendication 1, **caractérisé par** un deuxième élément de commutation (9) qui est branché en aval du premier dispositif de mémoire auxiliaire (8) et au moyen duquel les mots partiels de données peuvent être appliqués, au choix, à la deuxième entrée (B) du dispositif multiplicateur (4).

3. Processeur de traitement de signal selon l'une des revendications précédentes, **caractérisé par** une mémoire de valeurs fixes ROM (3) qui peut, au moyen d'un troisième élément de commutation (7), être reliée, au choix, à la deuxième entrée (B) du dispositif multiplicateur (4).

4. Processeur de traitement de signal selon l'une quelconque des revendications précédentes, **caractérisé en ce que** le premier dispositif de mémoire auxiliaire (8) est conformé de telle manière que, pendant un cycle fourni par le dispositif d'horloge (6), il peut fournir en sortie un mot de données et recevoir un autre mot de données.

5. Procédé pour la réalisation d'une multiplication au moyen d'un processeur de traitement de signal numérique selon l'une quelconque des revendications précédentes, **caractérisé en ce que**
dans un premier cycle fourni par le dispositif d'horloge (6), le premier dispositif de mémoire auxiliaire (8) est chargé avec un n^{ième} mot de données provenant de la RAM (2),
dans un deuxième cycle, il se produit une multiplication d'un n+1^{ième} mot de données provenant de la RAM (2) et appliqué à la première entrée (A) du dispositif multiplicateur (4) et d'un premier mot partiel de données du n^{ième} mot de données provenant du premier dispositif de mémoire auxiliaire (8) et appliqué à la deuxième entrée (B) du dispositif multiplicateur (4) et le n+1^{ième} mot de données provenant de la RAM (2) est mémorisé dans le deuxième dispositif de mémoire auxiliaire (10),
dans un troisième cycle, il se produit une multiplication du mot de données provenant du deuxième dispositif de mémoire auxiliaire (10) et fourni à la première entrée (A) du dispositif multiplicateur (4) et d'un deuxième mot partiel de données du n^{ième} mot de données provenant du premier dispositif de mémoire auxiliaire (8) et appliqué à la deuxième entrée (B) du dispositif multiplicateur (4) et un n+2^{ième} mot de données provenant de la RAM (2) est mémorisé dans le premier dispositif de mémoire auxiliaire (8),
et les étapes réalisées dans les deuxième et troisième cycles sont répétées avec les mots de données suivants provenant de la RAM (2).
